(19) **Europäisches Patentamt European Patent Office Office européen des brevets**

(11) **EP 0 786 643 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(51) Int Cl.:
*G01B 11/30* (2006.01)    *G01B 11/25* (2006.01)
*G01B 11/24* (2006.01)    *G01B 11/00* (2006.01)
*G01N 21/89* (2006.01)

(21) Anmeldenummer: **97101815.5**

(22) Anmeldetag: **05.02.1997**

(54) **Vorrichtung zur Inspektion der Oberfläche von Holz zwecks Feststellung von Oberflächenmerkmalen und Vervahren hierzu**

Wood surface inspection device for determination of surface characteristics and associated method

Dispositif d'inspection de la surface du bois pour la détermination des caractéristiques de surface et procédé associé

(84) Benannte Vertragsstaaten:
**CH DE FI FR LI SE**

(30) Priorität: **05.02.1996 DE 19604076**

(43) Veröffentlichungstag der Anmeldung:
**30.07.1997 Patentblatt 1997/31**

(73) Patentinhaber: **Baumer Optronic GmbH**
**01454 Radeberg/bei Dresden (DE)**

(72) Erfinder:
• **Wollmann, Christian, Dr.**
**01465 Liegau-Augustusbad (DE)**
• **Wenert, Lutz**
**01474 Wei ig (DE)**
• **Ihlefeld, Joachim, Dr.**
**01097 Dresden (DE)**

(74) Vertreter: **Ostertag, Ulrich et al**
**Patentanwälte**
**Ostertag & Partner**
**Epplestr. 14**
**70597 Stuttgart (DE)**

(56) Entgegenhaltungen:
**EP-A- 0 076 866**      **EP-A- 0 183 270**
**EP-A- 0 234 492**      **EP-A- 0 234 997**
**EP-A- 0 498 541**

## Beschreibung

Technisches Gebiet:

Die Erfindung betrifft eine Vorrichtung zur Inspektion der Oberfläche von Holz zwecks Feststellung von Oberflächenmerkmalen, wie Risse oder Astlöcher, bestehend aus wenigstens einem optoelektrischen Sensor, einer analogen und/oder digitalen elektronischen und/ oder optischen Vorverarbeitungseinheit sowie einem echtzeitfähigen Rechner, wobei das Holz relativ zum Sensor bewegbar ist sowie einem Inkremengeber, der den Sensor mit der Geschwindigkeit des Holzes synchronisiert gemäß dem Oberbegriff des Anspruchs 1 und ein Inspektionsverfahren gemäß Anspruch 11.

Stand der Technik:

Zur Oberflächeninspektion von Werkstoffen ist es bekannt, mit CCD-Zeilen- oder Matrixkameras sowie mit Laserscannern die betreffende Oberfläche abzutasten und mit Bildverarbeitungsmitteln Grauwert- bzw. Farbbilder zu analysieren.

Bei natürlichen Werkstoffen wie Holz treten dabei eine Reihe von Problemen auf, die durch den indirekten Zusammenhang der meisten zu definierenden Merkmale mit der Remission zusammenhängen. So führen schon unterschiedliche Holzfarben zu unterschiedlichen Erkennungsraten Bei der Verarbeitung von Hölzern beispielsweise im Tür- und Fensterbau oder bei der Herstellung von Furnieren ist es notwendig, daß die zu verarbeitenden Hölzer auf ihre Qualität hin untersucht werden, ob die Hölzer Risse, Astlöcher oder Überhöhungen und Vertiefungen aufweisen, die sie für den vorgesehen Einsatzzweck unbrauchbar machen. Bis heute werden deshalb solche Inspektionen von Hölzern weitestgehend von Personen durchgeführt.

Ferner gibt es eine Reihe von technischen Problemen, die allgemein mit der prozeßbedingten hohen Tiefenschärfe und gleichzeitig hohen Auflösung sowie Transportgeschwindigkeit des Holzes zusammenhängen. Dafür sind relativ aufwendige Beleuchtungseinrichtungen mit sehr hoher Leistung notwendig.

Durch die WO 89/07672 ist eine Vorrichtung zum optischen Abtasten einer Objektebene mittels eines Sensors und einer Lichtquelle unter erschwerten atmosphärischen Bedingungen zwecks Erkennung sich ändernder Überhöhungen auf der Ebene bekannt geworden, bei der zur Aufteilung des ausgesandten Lichtbündels in einen Tast- und einen Refenrenzbereich ein teildurchlässiger Spiegel und eine Umlenkoptik dient und so zwei achs-parallele Teilstrahlen gebildet werden, die auf Zweiquadrantendiode oder auf einen CCD-Matrixsensor fallen und dort nach Tast- und Referenzbereich getrennt elektrisch ausgewertet werden. Die Vorrichtung ist in einem Gehäuse angeordnet, welches ein Austritt- und ein Eintrittsfenster für die Lichtstrahlenbündel aufweist, wobei vor den Fenstern Druckluftschleusen angeordnet sind, um die Lichtquelle und den Sensor von die Atmosphäre verunreinigenden Partikeln zu säubern. Dokument EP-A-234 492 offenbart eine Prüfvorrichtung für die Erfassung von Gegenständen. Dokument EP-A-076866 offenbart einen Sensor nach dem Lichtschnitt-Verfahren. Weitere Veröffentlichungen hierzu sind die EP 0634648 A1, DE 2611514 B2 sowie die DE 3805968 A1.

Technische Aufgabe:

Der Erfindung liegt die Aufgabe zugrunde, ein Verfahren und eine Vorrichtung der eingangs genannten Gattung zu schaffen, mit der eine selbstätige Inspektion der Oberfläche von Hölzern fortlaufend durchgeführt werden kann, wobei eine Reihe von Merkmalen, wie Risse, Astlöcher oder Überhöhungen und Vertiefungen, sicher erkannt werden sollen und sowohl eine Farbdarstellung als auch weitere Merkmale gewonnen werden; die Vorrichtung soll daneben einfach und kostengünstig aufgebaut sein.

Offenbarung der Erfindung und deren Vorteile:

Die Lösung der Aufgabe ist erfindungsgemäß dadurch gekennzeichnet, daß der Sensor aus einem Farb-Laserscanner mit wenigstens zwei Strahlbündeln unterschiedlicher Wellenlänge und mit einem Empfänger mit wenigstens zwei Kanälen mit je einem opto-elektrischen Empfangselement besteht, wobei die Kanäle durch Strahlteilung des, vorzugsweise in Richtung der Flächennormalen, remittierten Strahlenbündels gebildet sind und wenigstens in einem der Kanäle ein Objektiv zum Erzeugen einer Zwischenbildebene angeordnet ist und nach dem Objektiv innerhalb des einen Kanals ein optisches Verlaufsfilter angeordnet ist, welches den passierenden Lichtstrom auf das zugehörige optoelektrische Empfangselement ortsabhängig zu modulieren imstande ist und die Signale des Empfangselements des einen Kanals ohne Verlaufsfilter im Rechner in ein Farbbild und diejenigen des anderen Kanals, dessen Lichtstrom ortsabhängig moduliert worden ist, in ein Profilbild der Oberfläche gewandelt werden.

In vorteilhafter Weise besteht der Farb-Laserscanner aus drei einzelnen Lasern unterschiedlicher Wellenlänge ($\lambda 1, \lambda 2, \lambda 3$), die im Zeitmultiplex mit kurzer Impulsdauer, z.B. mit 5nsec, abwechselnd nacheinander angesteuert werden, wobei die verschiedenen Strahlbündel nacheinander als kurze Impulse auf ein Polygonspiegelrad oder einen elastisch aufgehängten Mikrospiegel fallen. Oder die Strahlenbündel der drei Laser werden im Dauerstrich durch halbdurchlässige Spiegel zusammengeführt und fallen gemeinsam auf ein Polygonspiegelrad oder einen elastisch aufgehängten Mikrospiegel.

Zur Strahlteilung kann im remittierten Strahlenbündel ein Strahlteiler, wie Teilerspiegel, angeordnet sein, der das Strahlenbündel vorzugsweise hälftig aufteilt, wonach in jedem Teilstrahlengang hinter dem Strahlteiler zur Fokussierung der Strahlenbündel auf die optoelektrischen Empfangselemente Linsen angeordnet sein können. Vorteilhaft kann das Objektiv zum Erzeugen einer Zwischenbildebene entweder nach dem Teilerspiegel und vor dem optischen Verlaufsfilter innerhalb desjenigen Kanals, der das optische Verlaufsfilter aufweist, angeordnet sein oder sich vor dem Teilerspiegel für beide Kanäle befinden. Bevorzugt sind beide Kanäle bis auf das optisches Verlaufsfilter gleich aufgebaut.

Der Sensor ist vorteilhaft in einem Gehäuse angeordnet, welches zum Austritt des Laserstrahls einen schmalen, in der Länge der Auslenkung des Laserstrahls angepaßten Längsschlitz und zum Eintritt der remittierten Strahlenbündel eine Bohrung als Eintrittpupille aufweist, wobei sich innerhalb des Gehäuses eine Einrichtung zur Erzeugung eines Luftüberdruckes befindet und der Luftüberdruck über den Längsschlitz und die Eintrittspupille nach außen abströmende Luftströme erzeugt. Dadurch wird ein Eindringen von Staub und sonstigen atmosphärischen Verunreinigungen in das Gehäuse und Ablagern auf den Optiken der Vorrichtung vermieden.

Die Eintrittspupille kann einen sehr kleinen Durchmesser aufweisen und zusammen mit dem Objektiv vor dem Teilerspiegel ein Nadelöhrobjektiv bilden. Die optoelektrischen Empfangselemente können Fotodioden, vorzugsweise PIN-Fotodioden, sein. Das/die optoelektrische/n Empfangselement/e im Kanal oder in den Kanälen mit dem optischen Verlaufsfilter zur Modulation des Lichtstroms ($\varphi'_2$) kann/können positionsempfindliche optoelektrische Bauelemente, vorzugsweise hochgeschwindigkeitsfähige PSD-Bauelemente, sein.

Das Verfahren ist dadurch gekennzeichnet, daß der Sensor aus einem Farb-Laserscanner mit wenigstens zwei Strahlbündel unterschiedlicher Wellenlänge und mit einem Empfänger mit wenigstens zwei Kanälen mit je einem optoelektrischen Empfangselement besteht, und das, vorzugsweise in Richtung der Flächennormalen, remittierte Strahlenbündel in wenigstens zwei Teilstrahlenbündel zerlegt und und wenigstens in einem der Kanäle eine Zwischenbildebene erzeugt wird und der Lichtstrom desjenigen Kanals, in welchem die Zwischenbildebene erzeugt wird, ortsabhängig zur y-Auslenkung des Objektpunktes (Transportrichtung des Objektes) innerhalb des Teilstrahlenbündels moduliert wird, wonach die Signale des Empfangselements des einen Kanals ohne ortsabhängige Modulation im Rechner in ein Farbbild und diejenigen des anderen Kanals, dessen Lichtstrom ortsabhängig moduliert worden ist, in ein Profilbild der Oberfläche gewandelt werden.

Das Verfahren besitzt den Vorteil, daß es eine völlig selbstätige Inspektion der Oberfläche von Hölzern fortlaufend gestattet, wobei eine Reihe von Merkmalen, wie Risse, Astlöcher oder Überhöhungen und Vertiefungen, sicher erkannt werden und danach eine Aussortierung erfolgen kann. Vorteilhaft wird durch das Verfahren sowohl eine Farbdarstellung als auch weitere Merkmale, wie das Profil der Hölzer, gewonnen, so daß Rißbildungen eindeutig und in ihrer Ausdehnung erfaßt werden können. Des weiteren ist die Vorrichtung einfach und kostengünstig aufgebaut und kann vorteilhaft an eine Vielzahl von Holzverarbeitungsautomaten nachgerüstet werden.

Verfahrensmäßig wird die Lage des Bildpunktes in y-Richtung, das ist die Transportrichtung des Holzes, in ein Verhältnis der beiden Lichtströme umgewandelt, wobei das Verhältnis unabhängig vom Wert der Remission ist. Das Verhältnis der Lichtströme ($\phi'_1, \phi'_2$) kann in einer analogen oder digitalen oder analog/digitalen Vorverarbeitung erzeugt werden. Bei einer digitalen Vorverarbeitung der Lichtströme kann aus dem sich ergebenden Profil ($p_{profil}$) eine Wahrscheinlichkeit als Maß für das tatsächliche Auftreten eines gesuchten Merkmals errechnet werden und die zu detektierenden Merkmale, die durch eine eindeutige Störung des Profils beschrieben werden können und abgespeichert sind, können mittels eines Convolvers mit anschließendem Schwellwertvergleich aufgefunden werden.

Die Laserstrahlen des Farb-Laserscanners können unter je einem Winkel von 45 Grad, mit einer möglichen Abweichung von $\pm$ 25 Grad, vorzugsweise jedoch nur $\pm$ 15 Grad, zur Flächennormalen der Holzoberfläche auf diese einstrahlen, und die reflektierten Strahlen können in Richtung der Flächennormalen, mit einer möglichen Abweichung von $\pm$25 Grad, vorzugsweise jedoch nur $\pm$15 Grad, auf die Empfangselemente fallen, die positionsempfindliche optoelektrische Empfangselemente, wie PSD-Bauelemente, sein können.

Kurzbeschreibung der Zeichnung, in der zeigen:

Figur 1    eine schematische Ansicht einer Vorrichtung mit zwei Kanälen und einem abzutastenden Holz, welches in y-Richtung bewegt wird

Figur 2    eine schematische Darstellung der beiden Kanäle der Vorrichtung der Figur 1

Figur 3    ein elekrisches Blockschaltbild zur Auswertung der Fotoströme aus den beiden Kanälen und

Figur 4    eine mögliche Ausgestaltung eines Farblasers.

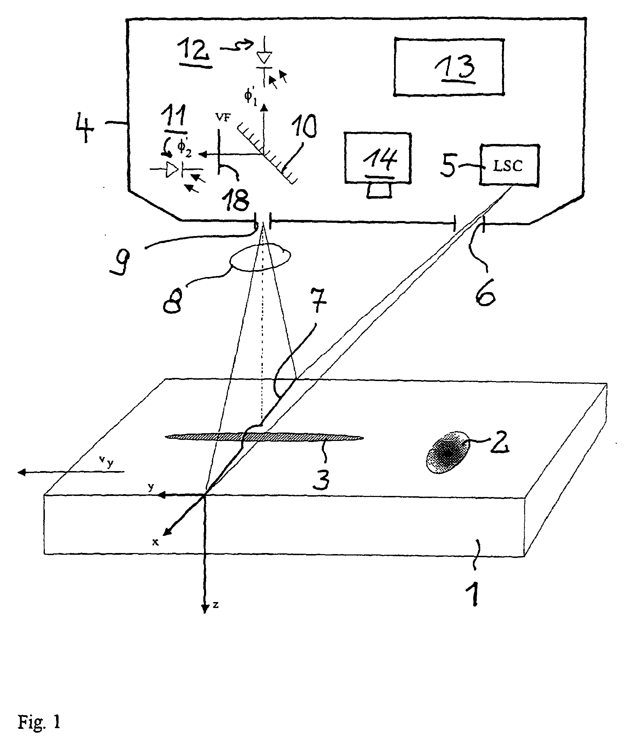

Nach Figur 1 besteht der Sensor aus einem Laserscanner 5, der einen Laserstrahl 7 erzeugt, welcher mittels eines Polygonspiegelrades oder mittels eines elastisch aufgehängten Mikrospiegels über die Breite x eines Objektes 1, vorzugsweise ein Holz 1, geführt wird; das Holz 1 wird in y-Richtung mit der Geschwindigkeit vy bewegt. Ein (nichtgezeigtes) Objektiv im Strahlengang des Laserscanners 5 gewährleistet einen gut konvergierenden, feinen Laserstrahl 7, der damit einen großen Tiefenschärfebereich der Abtastung ermöglicht.

Ein (nichtgezeigter) Inkrementgeber ist einerseits mit der Antriebsmaschine für das Holz und andererseits mit dem Laserscanner 5 gekoppelt. Der Geber synchronisiert die Drehzahl des Polygonspiegelrades oder die Schwingfrequenz des Mikrospiegels mit der Geschwindigkeit des Holzes, wobei die Synchronisation vorzugsweise quadratische Bildpunkte mit konstanter Größe ergibt. Ferner liefert der Geber jeweils einen Takt für einen nachgeschalteten Rechner 13 zur Verarbeitung der empfangenen Meßsignale.

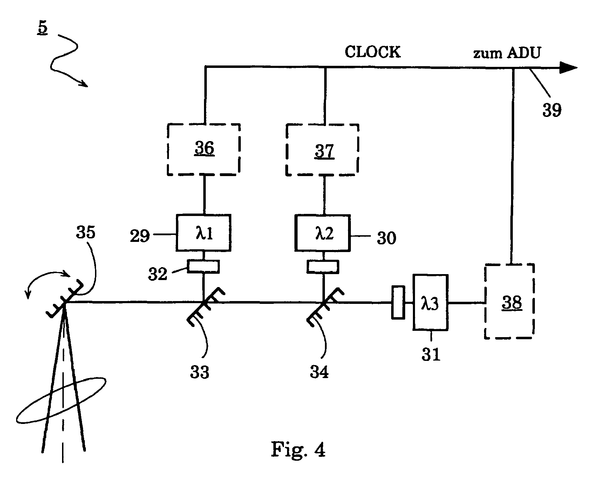

Der Farb-Laserscanner besteht gemäß Figur 4 aus drei einzelnen Lasern 29, 30, 31 unterschiedlicher Wellenlänge $\lambda 1$, $\lambda 2$, $\lambda 3$, die im Zeitmultiplex mit kurzer Impulsdauer, z.B. mit 5nsec, abwechselnd nacheinander angesteuert werden, wobei die verschiedenen Strahlbündel nacheinander als kurze Impulse auf ein Polygonspiegelrad oder einen elastisch aufgehängten Mikrospiegel fallen.

Ein Empfänger zum Empfang des remittierten Strahlenbündels 8 des Laserlichts besteht im wesentlichen aus zwei Kanälen 11, 12 mit je einem optoelektrischen Empfangselement 19,20, welches vorzugsweise Fotodioden, insbesondere pin-Fotodioden, sind, wobei die Empfangselemente positionsempfindlich sein können.

Laserscanner 5 und Empfangskanäle 11, 12 sind in einem gemeinsamen Gehäuse 4 angeordnet, welches zum Austritt des Laserstrahls 7 einen Längsschlitz 6 aufweist. Der Längsschlitz 6 verläuft dergestalt, daß die optische Achse des Lasers in einem Winkel von 45 Grad zur Flächennormalen der Oberfläche des Holzes 1 steht. Die optische Achse des Empfängers steht vor-zugsweise senkrecht zur Oberfläche des Holzes 1, wobei im Gehäuse 4 eine Bohrung 9 als Eintrittspupille des remittierten Strahlenbündels 8 angeordnet ist.

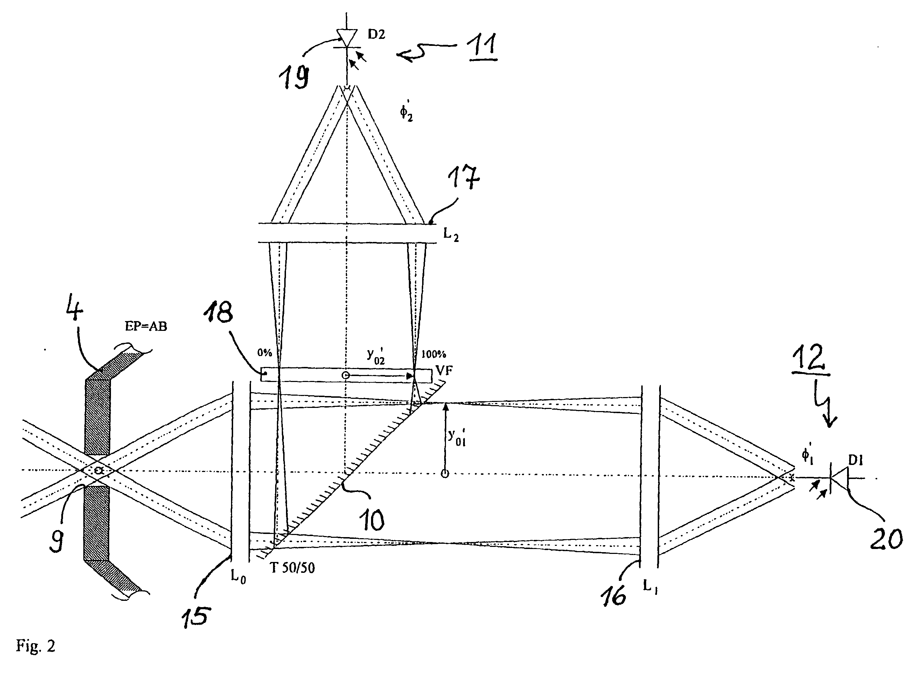

Gemäß Figur 2 ist hinter der Eintrittspupille 9 innerhalb des Gehäuses 4 ein Objektiv 15 angeordnet, das zusammen mit der sehr kleinen Eintrittspupille 9 ein sogenanntes Nadelöhrobjektiv bildet und das zum Erzeugen einer Zwischenbildebene dient. In Richtung des remittierten Strahlenbündels 8 befindet sich hinter dem Objektiv 15 eine Einrichtung zur Aufteilung des remittierten Strahlenbündels, vorzugsweise Teilerspiegel 10 mit einem Teilungsverhältnis von 50:50. Der durch den Teilerspiegel 10 tretende Lichtstrom $\phi'_1$ gelangt in den Kanal 12 und wird durch ein Objektiv 16 auf ein optoelektrisches Empfangselement 20, vorzugsweise pin-Fotodiode, fokussiert. Der durch den Teilerspiegel 10 umgelenkte Teil des Lichtstroms $\phi'_2$ gelangt in den Kanal 11, in welchem sich in der Zwischenbildebene ein Verlaufsfilter 18 befindet, welches eine lineare Veränderung des Lichtstromes $\phi'_2$ als Funktion der Koordinate $y'_{02}$ durchführt, unter Vernachlässigung von Abbildungsfehlern und Vignettierung. Das Verlaufsfilter 18 bewirkt entsprechend der Auslenkung des Laserstrahls 7 in y-Richtung, daß das sich ergebende remittierte Strahlenbündel 8 örtlich unterschiedlich auf das Verlaufsfilter 18 fällt, das den Lichtstrom ortsabhängig moduliert. Nach dem Verlaufsfilter 18 befindet sich ein Objektiv 17, das wiederum den Lichtstrom $\phi'_2$ auf ein optoelektrisches Empfangselement 19, vorzugsweise pin-Fotodiode, fokussiert. Die Kanäle 11, 12 können, mit Ausnahme der Verlaufsfilters 18, völlig gleich aufgebaut sein. Die Bohrung 9 der Eintrittspupille ist somit optisch symmetrisch zu den optoelektrischen Empfangselementen 19, 20.

Ebenso ist es möglich, die Zwischenbildebene erst nach dem Teilerspiegel zu erzeugen und dazu ein Objektiv nach dem Teilerspiegel vor dem Verlaufsfilter anzuordnen.

Der Laserscanner 5 scannt die Oberfläche des Holzes 1 in einer Ebene bevorzugt unter einem Winkel von 45 Grad, wobei noch eine Abweichung von $\pm$ 25 Grad möglich ist, zur Flächennormale der Holzfläche ab. Bei ideal ebener Oberfläche scannt der Laserstrahl 7 die x-Achse des kartesischen Koordinatensystems xyz. Falls die Oberfläche Risse (z<0) aufweist, so wandert der Abtastpunkt des Laserstrahls 7 in Richtung der positiven y-Achse. Die gewählten geometrischen Verhältnisse gewährleisten, daß eine Änderung der Objekthöhe $\Delta z$ eine gleichgroße Auslenkung des Abtastpunktes in y-Richtung $\Delta y$ bewirkt. Diese Auslenkung kann direkt mit dem Empfänger gemessen werden, wozu insbesondere zwei Parameter von Interesse sind, nämlich die Remission und die Tiefe der Oberflächenstörung. Das Farbbild wird im Kanal 12 gebildet.

Innerhalb des Kanals 11 wird das Profil des Holzes gewonnen. Ein besonderer Vorteil der Anordnung ergibt sich bei den typischerweise verwendeten hohen Datenraten von ca. 100 MPixel/sec. Die Lage des Bildpunktes in y-Richtung wird durch die optische Anordnung in ein Verhältnis von zwei Lichtströmen $\phi'_1$ und $\phi'_2$ umgewandelt, das mit hoher Datenrate unabhängig vom konkreten Wert der Remission arbeitet, d.h., daß dunkle und helle Bildpunkte gleich behandelt werden. Dazu wird die Zwischenbildebene erzeugt, in der das Verlaufsfilter 18 angeordnet ist. Die Transmission des Verlaufsfilters 18 ist direkt proportional zur y-Auslenkung des Objektpunktes. Empfindlichkeitsschwankungen des Sensors über der abgetasteten Fläche (Shading) können über weitere Verlaufsfilter in beiden Kanälen in der Nähe der Zwischenbildebene oder -ebenen korrigiert werden.

Der Rechner 13 ist innerhalb des Gehäuses 4 angeordnet, der vorzugsweise ein echtzeitfähiger Rechner ist, der die Verarbeitung der beiden Fotoströme aus den opto-elektrischen Empfangselementen 19, 20 vornimmt. Die Fotoströme können zuerst mit einem Transimpedanzverstärker mit geringem Linearitätsfehler vorverstärkt werden.

Die Lichtströme $\phi_1'$ und $\phi_2'$ werden in die Ausgangsströme der Fotodioden 19, 20 umgesetzt, so daß die folgende Gleichung gilt:

$$y_2{}' - y_{off}{}' = m\,\frac{\phi_2{}'}{\phi_1{}'} = m\,\frac{I_2}{I_1} \tag{1}$$

$\phi_1{}'$      Lichtstrom in Kanal 12
$\phi_2{}'$ -    Lichtstrom in Kanal 11
$m$ -     Anstieg
$y_2{}'$ -    Koordinate des Bildpunktes in der Zwischenbildebene
$y_{off}{}'$ -   konstanter Offset

Die Parameter m und $y_0{}'$ sind Konstanten, die im wesentlichen vom neutralen Verlaufsfilter 18 bestimmt werden. Die Transmission $\tau$ (x,y) des Verlaufsfilters genügt der folgenden Gleichung:

$$\tau(x_2{}', y_2{}') = m_\tau\left(y_2{}' + \frac{y_{max}{}'}{2}\right) + n_\tau \tag{2}$$

$m_\tau, n_\tau$ -    Konstanten

$y_{max}{}'$ -     Bildfeldgröße in der Zwischenbildebene

$$-\frac{y_{max}}{2} \leq y_2{}' \leq \frac{y_{max}{}'}{2}$$

Dann gilt nach Gleichung (1):

$$\ln\left(y_2{}' - y_{off}{}'\right) = \ln I_2 - \ln I_1 + const \tag{3}$$

Die Differenz der logarithmierten Ausgangsströme der Fotodioden ist somit unabhängig von der Größe der Remission des Objektpunktes.

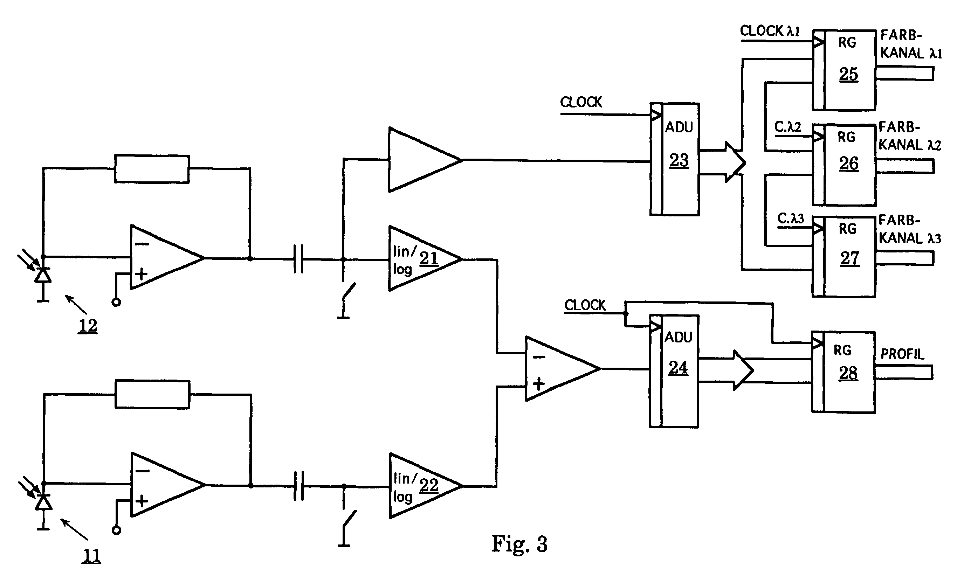

Ein elektrisches Blockschaltbild zur Auswertung der Fotoströme aus den beiden Kanälen 11 und 12 ist in Figur 3 dargestellt. Das AD-gewandelte Ausgangssignal des Kanals 12 erzeugt das Farbbild aus den drei Wellenlängen $\lambda 1$, $\lambda 2$, $\lambda 3$ des Farb-Laserscanners 5. Die Signale der Fotodioden 19, 20 werden, wie in der Fernsehtechnik üblich, mit Transimpedanzverstärkern verstärkt und können anschließend am Zeilenanfang geklemmt werden. Nach der Klemmung werden beide Signale in logarithmierenden Operationsverstärkern logarithmiert und über einen ADU 23 quantisiert. Der ADU 23, zum Beispiel 200 MHz/8bit, wird mit dem Takt des FarbLaserscanners 5 abgetastet. Für jede Wellenlänge $\lambda 1$, $\lambda 2$, $\lambda 3$ ist anschließend ein Register (RG) 25, 26, 27 vorgesehen, die jeweils mit dem Clock der entsprechenden Wellenlänge $\lambda 1$, $\lambda 2$, $\lambda 3$ abgetastet sind. An den Ausgängen der Register 25, 26, 27 stehen die Farbkanäle $\lambda 1$, $\lambda 2$, $\lambda 3$ zur Verfügung, aus denen ein Farbbild der Holzoberfläche gewonnen werden kann. Die Wellenlängen $\lambda 1$, $\lambda 2$, $\lambda 3$ entsprechen nicht notwenig den Hauptwellenlängen des üblicherweise verwendeten RGB-Farbraumes, sondern können in den Bereich des Infrarot verschoben sein, zum Beispiel: $\lambda 1 = 850$ nm; $\lambda 2 = 650$ nm; $\lambda 3 = 570$nm.

Das Verhältnis der Ausgangssignale bzw. der Lichtströme $\phi'_1$ und $\phi'_2$ kann digital oder mit Hinzuziehung einer analogen Vorverarbeitung erzeugt werden. Der Vorteil der analogen Vorverarbeitung besteht in einem höheren Dynamikbereich bzw. höheren Meßbereich der z-Koordinate. Das gleiche Ergebnis kann auch mit logarithmierenden ADU oder mit in mehrere Zweige aufgeteilten ADU erreicht werden. In gezeigtem Beispiel wird das Profil aus den beiden Kanälen 11 und 12 durch Logarithmierer 21, 22 und eine logarithmierende ADU 24 gewonnen. Am Ausgang eines nachfolgenden Registers 28 steht dann das Profil des Holzes zur Verfügung. Der Koordinatensprung in der Gegenstandsebene wird auf die Koordinate $y_{max}$ gelegt, so daß Riß-bildungen im Werkstoff (z>0) zu positiven y-Verschiebungen in der Gegenstandsebene führen. Das Ausgangssignal des Sensors ist somit ein logarithmisches Maß für Störungen der Oberfläche des Werkstoffs.

Bei der digitalen Signalverarbeitung kann in der Vorverarbeitung aus dem Profil eine Wahrscheinlichkeit $p_{profil}$

errechnet werden, die ein Maß für das tatsächliche Auftreten eines gesuchten Merkmals ist. Unter der Vielzahl der anwendungsspezifisch zu detektierenden Merkmale kann diejenige Gruppe, die durch eine eindeutige Störung des Profils beschrieben werden kann, über einen Convolver mit anschließendem Schwellwertvergleich gefunden werden. Darunter fallen beispielsweise Rißbildungen, Astlöcher und Oberflächenmängel durch abgenutzte Werkzeuge.

Innerhalb des Gehäuses 4 befindet sich ein Gebläse 14, welches innerhalb des Gehäuses 4 einen Überdruck erzeugt, der zwei Luftströme erzeugt, die durch den Schlitz 6 sowie die Eintrittspupille 9 ausströmen und dadurch verhindern, daß atmosphärische Verunreinigungen, wie Holzstaub, in das Gehäuse 4 eintreten und sich auf den Objektiven absetzen können.

Ein weitere Ausgestaltung des Farb-Laserscanners ist in Figur 4 gezeigt, der aus drei Lasern 29, 30, 31 mit diskreten unterschiedlichen Wellenlängen $\lambda1$, $\lambda2$, $\lambda3$ besteht; nach jedem Laser ist ein Objektiv 32 angeordnet. Zwei halbdurchlässige Spiegel 33, 34 sind so angeordnet, daß die Strahlenbündel $\lambda1$ und $\lambda2$ der Laser 29, 30 um 90 Grad abgelenkt auf ein Polygonspiegelrad 35 oder einen elastisch aufgehängten Mikrospiegel fallen, das dritte Strahlenbündel $\lambda1$ durchquert die halbdurchlässigen Spiegel 33, 34 ohne Ablenkung in Richtung des Polygonspiegelrades 35, wodurch die drei Strahlenbündel $\lambda1$, $\lambda2$, $\lambda3$ auf demselben im Dauerstrich zusammengesetzt werden. Über eine Leitung 39 wird der Takt, vorzugsweise über Modulatoren 36, 37, 38, den Lasern 29, 30,31 zugeführt, gleichzeitig ist der Takt an die Analog-Digital-Umsetzer 23, 24 gelegt. Zur Trennung der Strahlenbündel $\lambda1$, $\lambda2$, $\lambda3$ sind in diesem Fall für die Wellenlängen $\lambda2$ und $\lambda3$ weitere (nicht gezeigte) Löcher, vorzugsweise Nadelöhrobjektive, im Gehäuse 4 vorgesehen, denen jeweils ein einfacher Farbkanal $\lambda2$ und $\lambda3$ zugeordnet ist; das Strahlenbündel der Wellenlänge $\lambda1$ wird gemäß Beschreibung zu Figur 2 weiterverarbeitet zur Gewinnung des Profils.

Die Laserstrahlen des Farb-Laserscanners 5 strahlen unter je einem Winkel von 45 Grad, wobei noch eine Abweichung von $\pm$ 25 Grad, vorzugsweise $\pm$ 15 Grad möglich ist, zur Flächennormalen der Holzoberfläche auf diese ein; die reflektierten Strahlen fallen vorzugsweise in Richtung der Flächennormalen, wobei auch hier noch eine Abweichung von $\pm$25 Grad, vorzugsweise $\pm$15 Grad möglich ist, auf die Empfangselemente 19,20 ein, die vorzugsweise positionsempfindliche optoelektrische Empfangsele-mente, wie PSD-Bauelemente, sind.

Gewerbliche Anwendbarkeit:

Die Erfindung ist insbesondere in der Holz verarbeitenden Industrie anwendbar, da sie eine völlig selbstätige farbliche Inspektion der Oberfläche von Hölzern fortlaufend gestattet, wobei eine Reihe von Merkmalen, wie Risse, Astlöcher oder Überhöhungen und Vertiefungen, Farbunterschiede wie auch das Profil der Hölzer, sicher erkannt werden und danach eine Aussortierung erfolgen kann und insbesondere Rißbildungen eindeutig und in ihrer Ausdehnung erfaßt werden können.

Liste der Bezugszeichen:

| | |
|---|---|
| 1 | Holz |
| 2 | Astloch |
| 3 | Riß |
| 4 | Gehäuse |
| 5 | Laserscanner |
| 6 | Senkschlitz |
| 7 | Laserstrahl |
| 8 | remittierender Strahlenbündel |
| 9 | Bohrung oder Eintrittspupille |
| 10 | Teilerspiegel |
| 11,12 | Kanäle |
| 13 | Echtzeitrechner |
| 14 | Gebläse |
| 15,16,17 | Objektive |
| 18 | Verlaufsfilter |
| 19,20 | Fotodioden |
| 21, 22 | Logarithmierer |
| 23, 24 | Analog-Digital-Umwandler |
| 25, 26, 27, 28 | Register |
| 29,30,31 | Laser unterschiedlicher Wellenlänge |
| 32 | Objektiv |

| 33, 34 | halbdurchlässige Spiegel |
| 35 | Polygonspiegelrad |
| 36,37,38 | Modulatoren |
| 39 | Leitung |

**Patentansprüche**

1. Vorrichtung zur Inspektion der Oberfläche von Holz (1) zwecks Feststellung von Oberflächenmerkmalen (2,3), wie Risse (3), Astlöcher (2) oder Überhöhungen und Vertiefungen, bestehend aus wenigstens einem optoelektrischen Sensor, einer analogen und/oder digitalen elektronischen und/ oder optischen Vorverarbeitungseinheit sowie einem echtzeitfähigen Rechner (13), wobei das Holz (1) relativ zum Sensor bewegbar ist sowie einem Inkrementgeber, der den Sensor mit der Geschwindigkeit bzw. Bewegung des Holzes synchronisiert, **dadurch gekennzeichnet,** **daß** der Sensor aus einem Farb-Laserscanner (5) mit wenigstens zwei Strahlbündeln unterschiedlicher Wellenlänge und einem Empfänger mit wenigstens zwei Kanälen (11,12) mit je einem optoelektrischen Empfangselement (19,20) besteht, wobei die Kanäle (11,12) durch Strahlteilung des, vorzugsweise in Richtung der Flächennormalen, remittierten Strahlenbündels (8) gebildet sind und wenigstens in einem der Kanäle (11,12) ein Objektiv (15) zum Erzeugen einer Zwischenbildebene angeordnet ist und nach dem Objektiv (15) innerhalb des einen Kanals (11) ein optisches Verlaufsfilter (18) angeordnet ist, welches den passierenden Lichtstrom ($\phi$'2) auf das zugehörige optoelektrische Empfangselement (19) ortsabhängig zu modulieren imstande ist und die Signale des Empfangselements (12) des einen Kanals (12) ohne Verlaufsfilter (18) im Rechner (13) in ein Farbbild und diejenigen des anderen Kanals (11), dessen Lichtstrom ($\phi$'$_2$) ortsabhängig moduliert worden ist, in ein Profilbild der Oberfläche gewandelt werden.

2. Vorrichtung nach Anspruch 1, **dadurch gekennzeichnet,** **daß** der Laserscanner (5) aus drei einzelnen Lasern (29,30,31) unterschiedlicher Wellenlänge ($\lambda 1,\lambda 2,\lambda 3$) besteht, die im Zeitmultiplex mit kurzer Impulsdauer, z.B. 5 nsec, abwechselnd nacheinander angesteuert werden, und die verschiedenen Strahlbündel als kurze Impulse nacheinander auf ein Polygonspiegelrad oder einen elastisch aufgehängten Mikrospiegel fallen.

3. Vorrichtung nach Anspruch 1, **dadurch gekennzeichnet,** **daß** der Laserscanner (5) aus drei einzelnen Lasern (29,30,31) unterschiedlicher Wellenlänge besteht, deren Strahlenbündel im Dauerstrich durch halbdurchlässige Spiegel (33,34) zusammengeführt sind und gemeinsam auf ein Polygonspiegelrad oder einen elastisch aufgehängten Mikrospiegel fallen.

4. Vorrichtung nach Anspruch 1, **dadurch gekennzeichnet,** **daß** zur Strahlteilung im remittierten Strahlenbündel (8) ein Strahlteiler, wie Teilerspiegel (10), angeordnet ist, der das Strahlenbündel (8) vorzugsweise hälftig aufteilt, und danach in jedem Teilstrahlengang hinter dem Strahlteiler zur Fokussierung der Strahlenbündel (8) auf die optoelektrischen Empfangselemente (19,20) Linsen (16,17) angeordnet sind.

5. Vorrichtung nach Anspruch 1, **dadurch gekennzeichnet,** **daß** das Objektiv (15) zum Erzeugen einer Zwischenbildebene entweder nach dem Teilerspiegel (10) und vor dem optischen Verlaufsfilter (18) innerhalb desjenigen Kanals (11), der das optische Verlaufsfilter (18) aufweist, angeordnet ist oder sich vor dem Teilerspiegel (10) für beide Kanäle befindet.

6. Vorrichtung nach Anspruch 1, **dadurch gekennzeichnet,** **daß** der Sensor in einem Gehäuse (4) angeordnet ist, welches zum Austritt des Laserstrahls (7) einen schmalen, in der Länge der Auslenkung des Laserstrahls angepaßten Längsschlitz (6) und zum Eintritt des remittierten Strahlenbündels (8) eine Bohrung (9) als Eintrittpupille aufweist, sich innerhalb des Gehäuses (4) eine Einrichtung (14) zur Erzeugung eines Luftüberdruckes befindet und der Luftüberdruck über den Längsschlitz (6) und die Eintrittspupille (9) nach außen abströmende Luftströme erzeugt.

7. Vorrichtung nach Anspruch 6, **dadurch gekennzeichnet,** **daß** die Eintrittspupille (9) einen sehr kleinen Durchmesser aufweist und zusammen mit dem Objektiv (15) vor dem Teilerspiegel (10) ein Nadelöhrobjektiv bildet.

8. Vorrichtung nach Anspruch 1, **dadurch gekennzeichnet,**

**daß** die opto-elektrischen Empfangselemente Fotodioden (19,20), vorzugsweise PIN-Fotodioden sind.

9. Vorrichtung nach Anspruch 1, **dadurch gekennzeichnet,**
**daß** das positionsempfindliche optoelektrische Empfangselement im Kanal (11) mit dem optischen Verlaufsfilter (18) zur Modulation des Lichtstroms ($\phi'_2$) ein hochgeschwindigkeitsfähiges PSD-Bauelement, ist.

10. Vorrichtung nach Anspruch 3, **dadurch gekennzeichnet,**
**daß** beide Kanäle (11,12) bis auf das optisches Verlaufsfilter (18) gleich aufgebaut sind.

11. Verfahren zur Inspektion der Oberfläche von Holz (1) zwecks Feststellung von Oberflächenfehlern (2,3), wie Risse (3), Astlöcher (2) oder Überhöhungen und Vertiefungen, unter Verwendung wenigstens eines opto-elektrischen Sensors, einer analogen und/oder digitalen elektronischen und/oder optischen Vorverarbeitungseinheit sowie eines echtzeitfähigen Rechners (13), wobei das Holz (1) relativ zum Sensor bewegt wird, **dadurch gekennzeichnet,**
**daß** der Sensor aus einem Farb-Laserscanner (5) mit wenigstens zwei Strahlbündel unterschiedlicher Wellenlänge und einem Empfänger mit wenigstens zwei Kanälen (11,12) mit je einem opto-elektrischen Empfangselement (19,20) besteht, und das remittierte Strahlenbündel (8) in wenigstens zwei Teilstrahlenbündel zerlegt und und wenigstens in einem der Kanäle (11,12) eine Zwischenbildebene erzeugt wird und der Lichtstrom ($\phi'_2$) desjenigen Kanals (11), in welchem die Zwischenbildebene erzeugt wird, ortsabhängig zur y-Auslenkung des Objektpunktes (Transportrichtung des Objektes) innerhalb des Teilstrahlenbündels moduliert wird, wonach die Signale des Empfangselements (12) des einen Kanals (12) ohne ortsabhängige Modulation im Rechner (13) in ein Farbbild und diejenigen des anderen Kanals (11), dessen Lichtstrom ($\phi'_2$) ortsabhängig moduliert worden ist, in ein Profilbild der Oberfläche gewandelt werden.

12. Verfahren nach Anspruch 11, **dadurch gekennzeichnet,**
**daß** die Lage des Bildpunktes in y-Richtung in ein Verhältnis der beiden Lichtströme ($\phi'_1,\phi'_2$) umgewandelt wird, welches unabhängig vom Wert der Remission ist.

13. Verfahren nach Anspruch 11, **dadurch gekennzeichnet,**
**daß** das Verhältnis der Lichtströme ($\phi'_1,\phi'_2$) in einer analogen oder digitalen oder analog/digitalen Vorverarbeitung erzeugt wird.

14. Verfahren nach Anspruch 13, **dadurch gekennzeichnet,**
**daß** bei einer digitalen Vorverarbeitung der Lichtströme ($\phi'_1,\phi'_2$) aus dem sich ergebenden Profil eine Wahrscheinlichkeit ($P_{profil}$) als Maß für das tatsächliche Auftreten eines gesuchten Merkmals errechnet wird und die zu detektierenden Merkmale, die durch eine eindeutige Störung des Profils beschrieben werden können, mittels eines Convolvers mit anschließendem Schwellwertvergleich aufgefunden werden.

15. Verfahren nach einem der vorstehenden Ansprüche, **dadurch gekennzeichnet,**
**daß** die Laserstrahlen des Farb-Laserscanners (5) unter je einem Winkel von 45 Grad, mit einer möglichen Abweichung von $\pm$ 25 Grad, vorzugsweise jedoch nur $\pm$ 15 Grad, zur Flächennormalen der Holzoberfläche auf diese einstrahlen und die reflektierten Strahlen in Richtung der Flächennormalen, mit einer möglichen Abweichung von $\pm$25 Grad, vorzugsweise jedoch nur $\pm$15 Grad, auf die Empfangselemente (19,20) fallen, die positionsempfindliche optoelektrische Empfangselemente, wie PSD-Bauelemente, sind.

**Claims**

1. Device for inspecting the surface of wood (1) for the purpose of establishing surface features (2, 3) such as cracks (3), knotholes (2) or elevations and depressions, consisting of at least one optoelectrical sensor, an analogue and/or digital electronic and/or optical preprocessing unit and a realtime-capable computer (13), the wood (1) being movable relative to the sensor, as well as an incremental encoder which synchronises the sensor with the speed or movement of the wood, **characterised in that** the sensor consists of a colour laser scanner (5) with at least two beams of different wavelength and a receiver having at least two channels (11, 12), each with an optoelectrical reception element (19, 20), wherein the channels (11, 12) are formed by splitting the beam (8) reemitted preferably in the direction of the surface normal, and an objective (15) for producing an intermediate image plane is arranged at least in one of the channels (11, 12) and a graduated optical filter (18), which is capable of modulating the light flux ($\varphi'_2$)

passing through position-dependently onto the associated optoelectrical reception element (19), is arranged after the objective (15) inside the one channel (11), and the signals of the reception element (12) of the one channel (12) without a graduated filter (18) are converted in the computer (13) into a colour image and those of the other channel (11), whose light flux ($\varphi'_2$) has been modulated position-dependently, are converted into a profile image of the surface.

2. Device according to Claim 1, **characterised in that** the laser scanner (5) consists of three individual lasers (29, 30, 31) of different wavelength ($\lambda 1$, $\lambda 2$, $\lambda 3$) which are driven alternately in succession by time division multiplex with a short pulse duration, for example 5 nsec, and the various beams successively strike a polygonal mirror wheel or a resiliently suspended micromirror as short pulses.

3. Device according to Claim 1, **characterised in that** the laser scanner (5) consists of three individual lasers (29, 30, 31) of different wavelength whose beams are combined in a continuous mode by semitransparent mirrors (33, 34) and together strike a polygonal mirror wheel or a resiliently suspended micromirror.

4. Device according to Claim 1, **characterised in that** a beam splitter such as a splitter mirror (10), which preferably divides the beam (8) in half, is arranged for beam splitting in the reemitted beam (8), and lenses (16, 17) are arranged thereafter in each sub-beam path behind the beam splitter in order to focus the beam (8) onto the optoelectrical reception elements (19, 20).

5. Device according to Claim 1, **characterised in that** the objective (15) for producing an intermediate image plane either is arranged after the beam splitter mirror (10) and before the graduated optical filter (18), inside that channel (11) which comprises the graduated optical filter (18), or lies before the splitter mirror (10) for both channels.

6. Device according to Claim 1, **characterised in that** the sensor is arranged in a housing (4) which comprises a narrow longitudinal slit (6) adapted in length to the deflection of the laser beam, for the laser beam (7) to emerge, and comprises a hole (9) as an entry pupil for the reemitted beam (8) to enter, an instrument (14) for producing a positive air pressure lies inside the housing (4) and the positive air pressure produces air streams flowing outwards through the longitudinal slit (6) and the entry pupil (9).

7. Device according to Claim 6, **characterised in that** the entry pupil (9) has a very small diameter and forms a pinhole objective together with the objective (15) before the splitter mirror (10).

8. Device according to Claim 1, **characterised in that** the optoelectrical reception elements are photodiodes (19, 20), preferably PIN photodiodes.

9. Device according to Claim 1, **characterised in that** the position-sensitive optoelectrical reception element in the channel (11) with the graduated optical filter (8) for modulating the light flux ($\varphi'_2$) is a highspeed-capable PSD component.

10. Device according to Claim 3, **characterised in that** the two channels (11, 12) are constructed identically except for the graduated optical filter (18).

11. Method for inspecting the surface of wood (1) for the purpose of establishing surface features (2, 3) such as cracks (3), knotholes (2) or elevations and depressions, by using at least one optoelectrical sensor, an analogue and/or digital electronic and/or optical preprocessing unit and a realtime-capable computer (13), the wood (1) being moved relative to the sensor, **characterised in that** the sensor consists of a colour laser scanner (5) with at least two beams of different wavelength and a receiver having at least two channels (11, 12), each with an optoelectrical reception element (19, 20), and decomposes the reemitted beam (8) into at least two sub-beams, and and an intermediate image plane is produced at least in one of the channels (11, 12) and the light flux ($\varphi'_2$) of that channel (11) in which the intermediate image plane is produced is modulated position-dependently for the y deflection of the object point (transport direction of the object) within the sub-beam, whereupon the signals of the reception element (12) of the one channel (12) without position-dependent modulation are converted in the computer (13) into a colour image and those of the other channel (11), whose light flux ($\varphi'_2$) has been modulated position-dependently, are converted into a profile image of the surface.

12. Method according to Claim 11, **characterised in that** the position of the image point in the y direction is converted into a ratio of the two light fluxes ($\varphi'_1$, $\varphi'_2$), which is independent of the value of the reemission.

13. Method according to Claim 11, **characterised in that** the ratio of the light fluxes ($\varphi'_1$, $\varphi'_2$) is produced in analogue or digital or analogue/digital preprocessing.

14. Method according to Claim 13, **characterised in that** in the case of digital preprocessing of the light fluxes ($\varphi'_1$, $\varphi'_2$), a probability ($P_{profile}$) is calculated from the resulting profile as a measure of the actual occurrence of an intended feature and the features to be detected, which can be described by a unique perturbation of the profile, are found by means of a convolver with subsequent threshold value comparison.

15. Method according to one of the preceding claims, **characterised in that** the laser beams of the colour laser scanner (5) each impinge on the wood surface at an angle of 45 degrees with a possible deviation of 25 degrees, but preferably only 15 degrees, to the surface normal thereof and the reflected rays strike the reception elements (19, 20), which are position-sensitive optoelectrical reception elements such as PSD components, in the direction of the surface normal with a possible deviation of 25 degrees, but preferably only 15 degrees.

**Revendications**

1. Dispositif d'inspection de la surface de bois (1) pour la détermination de caractéristiques de surface (2, 3) telles que crevasses (3), noeuds (2) ou bosses et creux, composé d'au moins un capteur optoélectronique, d'une unité de prétraitement analogique et/ou numérique électronique et/ou optique ainsi que d'un calculateur en temps réel (13), le bois (1) étant déplaçable par rapport au capteur, ainsi que d'un générateur d'incréments qui synchronise le capteur avec la vitesse ou le déplacement du bois,
   **caractérisé en ce**
   **que** le capteur est composé d'un scanner laser couleur (5) à au moins deux faisceaux de rayonnement de longueur d'onde différente et d'un récepteur à au moins deux canaux (11, 12) avec chacun un élément de réception optoélectrique (19, 20), les canaux (11, 12) étant formés par division de faisceau du faisceau de rayonnement réfléchi (8) de préférence en direction de la normale à la surface, et un objectif (15) pour générer un plan image intermédiaire étant disposé dans au moins un des canaux (11, 12) et un filtre de champ optique ou filtre dégradé (18) étant disposé après l'objectif (15) dans l'un des canaux (11), lequel est apte à moduler le flux lumineux passant ($\phi'_2$) en fonction de la position sur l'élément de réception optoélectrique (19) associé, et les signaux de l'élément de réception (12) du canal (12) sans filtre de champ (18) étant convertis dans le calculateur (13) en une image en couleurs et ceux de l'autre canal (11), dont le flux lumineux ($\phi'_2$) a été modulé en fonction de la position, en une image de profil de la surface.

2. Dispositif selon la revendication 1, **caractérisé en ce**
   **que** le scanner laser (5) est composé de trois lasers individuels (29, 30, 31) de longueur d'onde différente ($\lambda 1$, $\lambda 2$, $\lambda 3$) qui sont commandés l'un après l'autre par alternance en multiplex temporel avec une courte durée d'impulsion, par exemple 5 ns, et les différents faisceaux de rayonnement arrivent l'un après l'autre sous forme de courtes impulsions sur une roue à miroir polygonal ou un micromiroir suspendu élastiquement.

3. Dispositif selon la revendication 1, **caractérisé en ce**
   **que** le scanner laser (5) est composé de trois lasers individuels (29, 30, 31) de longueur d'onde différente dont les faisceaux de rayonnement sont réunis en régime continu par des miroirs semi-transparents (33, 34) et arrivent ensemble sur une roue à miroir polygonal ou un micromiroir suspendu élastiquement.

4. Dispositif selon la revendication 1, **caractérisé en ce**
   **que** pour la division de faisceau, un diviseur de faisceau comme un miroir diviseur (10) est disposé dans le faisceau de rayonnement réfléchi (8), lequel partage le faisceau de rayonnement (8) de préférence par moitié, et des lentilles (16, 17) sont disposées ensuite dans chaque chemin optique partiel après le diviseur de faisceau pour focaliser le faisceau de rayonnement (8) sur les éléments de réception optoélectriques (19, 20).

5. Dispositif selon la revendication 1, **caractérisé en ce**
   **que** l'objectif (15) servant à générer un plan image intermédiaire est soit disposé après le miroir diviseur (10) et avant le filtre de champ optique (18) dans le canal (11) qui présente le filtre de champ optique (18), soit se trouve avant le miroir diviseur (10) pour les deux canaux.

6. Dispositif selon la revendication 1, **caractérisé en ce**
   **que** le capteur est disposé dans un boîtier (4) qui présente pour la sortie du rayon laser (7) une étroite fente longitudinale (6) de longueur adaptée à la déviation du rayon laser et pour l'entrée du faisceau de rayonnement réfléchi (8) un trou (9) en tant que pupille d'entrée, qu'un dispositif (14) servant à générer une surpression d'air se trouve à l'intérieur du boîtier (4) et que la surpression d'air génère des courants d'air sortant vers l'extérieur via la fente longitudinale (6) et la pupille d'entrée (9).

7.  Dispositif selon la revendication 6, **caractérisé en ce que** la pupille d'entrée (9) présente un très petit diamètre et forme avec l'objectif (15) un objectif trou d'épingle devant le miroir diviseur (10).

8.  Dispositif selon la revendication 1, **caractérisé en ce que** les éléments de réception optoélectriques sont des photodiodes (19, 20), de préférence des photodiodes PIN.

9.  Dispositif selon la revendication 1, **caractérisé en ce que** l'élément de réception optoélectrique sensible à la position dans le canal (11) avec le filtre de champ optique (18) pour la modulation du flux lumineux ($\phi'_2$) est un composant PSD ultrarapide.

10. Dispositif selon la revendication 3, **caractérisé en ce que** les deux canaux (11, 12) ont une structure identique à l'exception du filtre de champ optique (18).

11. Procédé d'inspection de la surface de bois (1) pour la détermination de défauts de surface (2, 3) tels que crevasses (3), noeuds (2) ou bosses et creux, en utilisant au moins un capteur optoélectronique, une unité de prétraitement analogique et/ou numérique électronique et/ou optique ainsi qu'un calculateur en temps réel (13), le bois (1) étant déplacé par rapport au capteur,
    **caractérisé en ce**
    que le capteur est composé d'un scanner laser couleur (5) à au moins deux faisceaux de rayonnement de longueur d'onde différente et d'un récepteur à au moins deux canaux (11, 12) avec chacun un élément de réception optoélectrique (19, 20), et le faisceau de rayonnement réfléchi (8) est décomposé en au moins faisceaux de rayonnement partiels et un plan image intermédiaire est généré au moins dans un des canaux (11, 12) et le flux lumineux ($\phi'_2$) du canal (11) dans lequel le plan image intermédiaire est généré est modulé en fonction de la position pour la déviation y du point objet (direction de transport de l'objet) à l'intérieur du faisceau de rayonnement partiel, après quoi les signaux de l'élément de réception (12) du canal (12) sans modulation en fonction de la position sont convertis dans le calculateur (13) en une image en couleurs et ceux de l'autre canal (11), dont le flux lumineux ($\phi'_2$) a été modulé en fonction de la position, en une image de profil de la surface.

12. Procédé selon la revendication 11, **caractérisé en ce que** la position du point image en direction y est convertie en un rapport des deux flux lumineux ($\phi'_1$, $\phi'_2$) qui est indépendant de la valeur de la réflexion.

13. Procédé selon la revendication 11, **caractérisé en ce que** le rapport des flux lumineux ($\phi'_1$, $\phi'_2$) est généré dans un prétraitement analogique ou numérique ou analogique/numérique.

14. Procédé selon la revendication 13, **caractérisé en ce que** l'on calcule lors d'un prétraitement numérique des flux lumineux ($\phi'_1$, $\phi'_2$), à partir du profil résultant, une probabilité ($P_{profil}$) formant un critère d'apparition effective d'une caractéristique recherchée et que les caractéristiques à détecter, qui peuvent être décrites par une perturbation sans équivoque du profil, sont reconnues au moyen d'un convolutionneur avec comparaison de valeurs seuils subséquente.

15. Procédé selon l'une des revendications précédentes,
    **caractérisé en ce**
    que les rayons laser du scanner laser couleur (5) atteignent la surface du bois chacun selon un angle de 45 degrés, avec une déviation possible de ± 25 degrés, mais de préférence seulement de ± 15 degrés, par rapport à la normale à la surface du bois, et les rayons réfléchis arrivent sur les éléments de réception (19, 20), qui sont des éléments de réception optoélectriques sensibles à la position comme des composants PSD, en direction de la normale à la surface avec une déviation possible de ± 25 degrés, mais de préférence seulement de ± 15 degrés.

Fig. 1

Fig. 2

Fig. 3

<u>5</u>

CLOCK          zum ADU

39

36          37

35          29 — λ1          λ2 — 30          31          38

32

33          34          λ3

31

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8907672 A
- EP 234492 A
- EP 076866 A
- EP 0634648 A1
- DE 2611514 B2
- DE 3805968 A1